# EUROPÄISCHE PATENTSCHRIFT

(11) **EP 3 718 889 B1**
(45) Veröffentlichungstag und Bekanntmachung des Hinweises auf die Patenterteilung: **07.09.2022**
(21) Anmeldenummer: 20167761.4
(22) Anmeldetag: 02.04.2020
(51) Int. Cl.: B64D 11/00

(54) **VERSTAU- UND ENTNAHMESYSTEM FÜR ROLLBARE BEHÄLTER IN EINEM FAHRZEUG SOWIE EIN FAHRZEUG MIT EINEM DERARTIGEN SYSTEM**
STORAGE AND RETRIEVAL SYSTEM FOR ROLLABLE CONTAINER IN A VEHICLE AND VEHICLE COMPRISING SUCH A SYSTEM
SYSTÈME DE RANGEMENT ET DE SOUTIRAGE POUR RÉCIPIENTS ROULANTS DANS UN VÉHICULE AINSI QUE VÉHICULE DOTÉ D'UN TEL SYSTÈME

(30) Priorität: 03.04.2019 DE 102019108747
(43) Veröffentlichungstag der Anmeldung: 07.10.2020
(73) Patentinhaber: Airbus Operations GmbH, 21129 Hamburg (DE)
(72) Erfinder: Giesa, Hans-Gerhard, 21129 Hamburg (DE); Bauer, Michael, 21129 Hamburg (DE); Lange, Roland, 21079 Hamburg (DE); Wietzke, Andreas, 21079 Hamburg (DE)

(56) Entgegenhaltungen:
- WO-A2-2008/091287
- DE-A1-102013 006 145
- DE-U1-202008 012 692
- FR-A1- 2 954 276
- US-A1- 2008 136 299

## Beschreibung

### TECHNISCHES GEBIET

Die Erfindung betrifft ein Verstau- und Entnahmesystem für rollbare Behälter in einem Fahrzeug sowie ein Fahrzeug mit einem derartigen System.

### HINTERGRUND DER ERFINDUNG

Fahrzeuge, die dem Transport einer Vielzahl von Passagieren dienen, sind üblicherweise mit Kabinen mit Passagiersitzen, einer oder mehreren Bordtoiletten und optional einer oder mehreren Bordküchen ausgestattet. Insbesondere bei der Kompaktierung von Bordküchen in Verkehrsflugzeugen existieren Konzepte, bei denen Stellplätze für Servierwagen (Trolleys) genutzt werden, in denen mehrere Servierwagen hintereinander angeordnet werden. Üblicherweise bezieht sich dies auf die Verwendung von Servierwagen gemäß ATLAS-, ARINC- oder KSSU-Standards und die kombinierte Verwendung eines Servierwagens mit voller Bautiefe ("Full Size Trolley") und eines Servierwagens mit halber Bautiefe ("Half Size Trolley") oder zweier Servierwagen mit voller Bautiefe (zwei "Full Size Trolley"). Auch für Versorgungsbehälter, die als Boxen in der Bordküche gelagert werden müssen, kann aufgrund der Bautiefe für den Lagerraum eine Verstauung von zwei Boxen oder mehr hintereinander möglich sein.

Zum Entnehmen von Servierwagen aus einem solchen Stellplatz wird üblicherweise ein an einer Oberseite befindlicher Griff durch einen Benutzer gegriffen und aus dem Stellplatz herausgezogen. Der Servierwagen ist dafür mit Rollen ausgestattet, die zum Verfahren innerhalb des Küchenbereichs sowie auch für den Servierprozess innerhalb der Flugzeugkabine zum Bewegen des Servierwagens im Flugzeuglängsgang von Sitzreihe zu Sitzreihe vorgesehen sind. Für Servierwagen auf den hinteren Stellplätzen ist notwendigerweise eine Entnahmevorrichtung vorgesehen. Insbesondere wenn ein Full-Size-Trolley in einem hinteren Stellplatz geparkt ist, ist es für die Flugbegleiter möglicherweise ein größerer Kraftaufwand und auch in der Zugänglichkeit erschwert, den Full-Size-Trolley aus dem hinteren Stellplatz heraus zu befördern.

Derartige Entnahmeeinrichtungen für Servierwagen sind aus WO 2016 034 531 A1 oder auch WO 2014 125 046 A1 bekannt. Hier werden über Stäbe und Eingriffsvorrichtungen zum Trolleykörper ein Vor-und Zurückbewegen des Servierwagens in dem Stellplatzraum vorgesehen. Auch für Verpflegungsbehälter in Boxen ist eine Entnahme über Seilsysteme vom hinteren Stellplatz bekannt. Jedoch kann die Bedienbarkeit, Handhabbarkeit eines Servierwagens/einer Box gerade für Stellplätze, die hintereinander angeordnet sind, verbessert werden.

Aus US 2008/136299 A1 ist eine Bordküche für Verkehrsflugzeuge bekannt, die mit einer Hebevorrichtung Servierwagen vertikal transportieren und somit in einer zweiten Ebene an einem Lagerplatz ablegen kann.

FR 2 954 276 A1 zeigt ebenfalls eine Bordküche mit einem Aufnahmeraum für Transportbehälter in einem Flugzeug, die mit einer Hebevorrichtung Servierwagen vertikal transportiert. Die Servierwagen sind dafür auf einer Transferplatte abgestellt. Für die Auf- und Abwärtsbewegung ist ein Liftsystem notwendig, welches ein vertikales Bewegen der Plattform ermöglicht. Die Plattform ermöglicht jedoch keine horizontale Bewegung der Servierwagen. Der transportierte Servierwagen muss zur Lagerposition von der Transferplatte in den Aufnahmeraum geschoben werden. WO2008/091287 A2 zeigt ein Frachtladesystem für Container, welches eine motorisierte Plattform aufweist. Die Frachtcontainer können hier mit Unterstützungskräften, die durch Motoren und entsprechende Ansteuerung erzeugt werden, im Frachtraum eines Flugzeuges bewegt werden.

### ZUSAMMENFASSUNG DER ERFINDUNG

Zur weiteren Kompaktierung von Bordküchen könnte es hilfreich sein, Verpflegungsbehälter, wie Servierwagen oder auch Boxen hintereinander in einem Aufnahmeraum anzuordnen. Dies ist jedoch in der Handhabbarkeit nicht optimal, denn ein hinterer Servierwagen oder eine hintere Box kann von Bordpersonal nur sehr schwer erreicht werden, da er sich in einem relativ großen Abstand von einer Einschuböffnung des Stellplatzes befindet.

Eine Aufgabe der Erfindung liegt folglich darin, eine Vorrichtung oder eine Bordküche vorzuschlagen, mit der hintereinander angeordneten Verpflegungsbehälter in einem Aufnahmeraum durch Bordpersonal leicht zu handhaben sind, so dass insbesondere in einem Aufnahmeraum hinten angeordnete Verpflegungsbehälter möglichst einfach erreichbar sind.

Die Aufgabe wird gelöst durch einen Aufnahmeraum einer Bordküche zur Lagerung für Behälter in einem Fahrzeug mit einem Verstau- und Entnahmesystem für Verpflegungsbehälter in einem Fahrzeug mit den Merkmalen des unabhängigen Anspruchs 1. Vorteilhafte Ausführungsformen und Weiterbildungen sind den Unteransprüchen und der nachfolgenden Beschreibung zu entnehmen. Die Anwendung eines derartigen Verstau- und Entnahmesystems ist nicht auf Verpflegungsbehälter beschränkt, es können auch Behälter für andere Zwecke mit dem erfindungsgemäßen Verstau- und Entnahmesystem bewegt werden.

Es wird ein Aufnahmeraum einer Bordküche mit einem Verstau- und Entnahmesystem für Behälter in einem Fahrzeug, vorgeschlagen, welches im Wesentlichen ein Schienensystem im Bodenbereich aufweist und einen Versorgungsbehälter von einer Lagerposition zu einer Entnahmeposition bewegen kann. Das System weist dafür ein Schienensystem im Bodenbereich des Aufnahmeraumes auf. Der Boden kann beispielsweise ein Bodenelement des Aufnahmeraumes sein oder aber auch ein Fahrzeugboden, in dem der Aufnahmeraum angeordnet ist. Das Schienensystem kann auf dem Boden befestigt sein oder auch im Fußboden integriert werden. Die Auswahl der entsprechenden Befestigung auf dem Boden oder Integration in den Boden erfolgt mit dem Ziel, die Gesamtaufbauhöhe des Schienensystems zu minimieren, um die baulichen baulichen Gegebenheiten des Aufnahmeraumes zu berücksichtigen, die auf die Abmessungen der entsprechenden Verpflegungsbehälter angepasst sind.

Weiterhin ist eine Transferplatte vorgesehen, die auf dem Schienensystem bewegbar ist und eine Lagerposition sowie eine Entnahmeposition für den Verpflegungsbehälter einnehmen kann. Die Lagerposition des Verpflegungsbehälters mit seiner Rückwand ist angrenzend an die Rückwand des Aufnahmeraumes vorgesehen. Die Entnahmeposition ist im Bereich einer Einschuböffnung zum Einschieben und Entnehmen eines Verpflegungsbehälters in den Aufnahmeraum vorgesehen. Diese Einschuböffnung ist gegenüberliegend zur Rückwand des Aufnahmeraumes ausgebildet.

Das Schienensystem weist Führungsschienen, vorzugsweise Linearsysteme oder auch Teleskopführungsschienen auf, die im Bereich der Lagerposition am Fußboden in Bewegungsrichtung der Transferplatte angeordnet sind. Die Linearsysteme können beispielsweise als Führungsschienen ausgebildet sein, die mit Bewegungskörpern wie Laufrollen oder mit Schienenkörpern aus Kugellagern oder Wälzkörpern korrespondieren. Auch Bewegungskörper als Gleitkörper sind einsetzbar. Beispielsweise sind Linerarführungen mit Kunststoffgleitlagern anwendbar. Derartige Bewegungskörper sind an der Transferplatte angeordnet.

In einer bevorzugten Ausführungsform ist der Aufnahmeraum zum Aufnehmen mindestens zwei hintereinander angeordneter Verpflegungsbehälter ausgebildet und der hintere Verpflegungsbehälter ist auf der Transferplatte positioniert.

Der Aufnahmeraum ist folglich sehr bequem mit größeren, rollbaren Behältern befüllbar und erlaubt insbesondere bei der Verwendung in einer Kabine eines Verkehrsflugzeugs die sehr platzsparende, raumökonomische Unterbringung von Servierwagen hintereinander.

Nach einer herkömmlichen Entnahme eines vorderen Behälters, der an der Einschuböffnung angeordnet ist, kann durch Verwendung eines Entnahme- und Verstausystems der hintere Behälter entnommen werden, der von der Einschuböffnung deutlich beabstandet im Innern des Aufnahmeraumes angeordnet ist.

Für Versorgungsbehälter, beispielsweise Servierwagen, die auf den hinteren Stellplätzen einer Bordküche in einem Fahrzeug angeordnet sind, ist vorzugsweise das erfindungsgemäßes Verstau- und Entnahmesystem vorgesehen. Insbesondere wenn ein Full-Size-Trolley in einem hinteren Stellplatz geparkt ist, ist es für die Flugbegleiter eine große Erleichterung, den relativ schweren Behälter mittels der Transferplatte in einen gut erreichbaren Zugriffsbereich zu positionieren und in einfacher Weise aus dem hinteren Stellplatz heraus zu befördern.

Die der Einschuböffnung gegenüberliegend angeordnete Rückwand des Aufnahmeraums ist eine hintere Begrenzung eines Stellplatzes in dem Aufnahmeraum, an die ein hinterster Behälter anstößt bzw. in Anschlag gerät bzw. angrenzt. Dies entspricht der Lagerposition des Versorgungsbehälters. Die Größe und Form des Behälters kann je nach Anforderung in dem Fahrzeug gewählt werden. Wird das Fahrzeug als ein Verkehrsflugzeug realisiert, bietet sich die Verwendung von Servierwagen nach einschlägigen Standards an, etwa nach dem ATLAS-Standard. Die erfindungsgemäßen Vorteile werden zudem dann besonders deutlich, wenn die rollbaren Behälter eine Tiefenerstreckung aufweisen, die größer als 30 bis 40 cm ist. Insbesondere bei einem Full-Size-Trolley, der ungefähr eine Länge von 80 bis 82 cm aufweist.

Die Transferplatte ist mit mindestens eine Verriegelungsvorrichtung ausgestattet, die das Verriegeln der Transferplatte für die Einfahr- und Entnahmeposition realisiert. Es kann auch zusätzlich oder optional vorgesehen sein, in der Lagerposition, d,h, den an die Rückwand angrenzenden Behälter durch Fixierung der Transferplatte in seiner dortigen Stellung fixieren. Die Verriegelungsvorrichtung kann dafür Verriegelungselemente, vorzugsweise vordere und hintere Verriegelungselemente aufweisen. Diese können auf eine beliebige Weise ausgestaltet sein, die das einfache Verriegeln und das leichte Lösen zur Entnahme des betreffenden Behälters erlaubt. Das Verriegeln kann insbesondere durch ein bewegbares, formschlüssig wirkendes Riegelelement realisiert werden, das mit einem entsprechenden Formmerkmal des Behälters oder der Transferplatte korrespondiert.

Die mindestens eine Verriegelungsvorrichtung kann vorzugsweise mechanisch oder elektromechanisch betätigbar sein. Auch eine selbsttätige Verriegelung und/oder Entriegelung ist denkbar. Beispielsweise bei Erreichen der Einfahr- und Entnahmeposition erfolgt eine selbsttätige Verriegelung der Transferplatte in dieser Position und für die Bewegung in die Lagerposition wird die Transferplatte aktiv entriegelt. Ein Bedienelement, welches mit der Verriegelungsvorrichtung verbunden ist, kann insbesondere an einer dem Benutzer zugewandten Seite angeordnet sein. Einem Benutzer wird hierdurch sehr leicht ermöglicht, die Verriegelungsvorrichtung zu lösen bzw. Kenntnis von dem momentanen Verriegelungszustand zu erlangen. Die konkrete Ausgestaltung des Bedienelements kann von der Art der Verriegelungsvorrichtung abhängen. Es bieten sich Zug-, Schub- und Drehelemente an, welche durch ein Gestänge oder eine andere Einrichtung eine gewünschte axiale, rotatorische oder kombinierte axiale und rotatorische Bewegung an die erste Verriegelungsvorrichtung weiterleiten.

Beispielsweise kann ein Fußpedal vorgesehen sein, welches über Seilzüge die entsprechenden Verriegelungselemente ansteuert. Alternativ kann über Signalleitungen oder auch drahtlos die Verriegelungsvorrichtung angesteuert und ausgelöst werden. In einer weiteren alternativen Ausführungsform kann eine Handkurbel in ein entsprechendes Schlosselement eingreifen und die Betätigung der Verriegelung auslösen. Zusätzlich ist es auch denkbar, mit der Kurbel die Transferplatte zu bewegen, indem Schub- oder Zugkraft auf die Transferplatte einwirkt.

Eine Kernkomponente des erfindungsgemäßen Verstau- und Entnahmesystems ist die Transferplatte, die den Verpflegungsbehälter aufnimmt und bewegt werden kann zwischen der Lagerposition und der Entnahmeposition. Um eine sichere Lagerung des Verpflegungsbehälters auf der Transferplatte zu ermöglichen, ist mindestens eine Positioniereinrichtung vorgesehen. Diese ist vorzugsweise als Anschlag im hinteren Bereich der Platte ausgebildet oder als Riegelelement an entsprechender Position im Aufnahmeraum.

Weiterhin kann das Verstau- und Entnahmesystem Auffahrhilfen aufweisen, die zur Überwindung des Höhenunterschieds zwischen Boden und der Transferplatte das Auffahren der rollbaren Verpflegungsbehälter erleichtert. Die Auffahrhilfen können auch an entsprechender Position am Fußboden vorgesehen sein, die dann in Wirkverbindung mit der an richtiger Stelle positionierten Transferplatte das Auffahren und Hinunterfahren der rollbaren Verpflegungsbehälters ermöglicht. Dies ist alternativ oder auch in Kombination zu den Auffahrhilfen an der Transferplatte möglich.

In einer vorteilhaften Ausgestaltung sind die Auffahrhilfen stirnseitig der Führungsschienen an entsprechender Position am Boden angeordnet.

Das Schienensystem weist weiterhin vorzugsweise zwei parallel zu den Außenkanten der Transferplatte verlaufende Führungsschienen auf, die unterhalb der Transferplatte vorgesehen sind. Die Führungsschienen sind somit durch die Transferplatte in der Lagerposition abgedeckt.

Die Führungsschienen können derart positioniert sind, dass sie jeweils ungefähr lotrecht unterhalb der Transportrollen verlaufen und als Lauffläche für die Transportrollen im Bereich der Oberseite der Führungsschienen zumindest im Aufnahmeraum des vorderen Stellplatzes jeweils einem Abdeckelement vorgesehen ist.

In einer vorteilhaften Ausgestaltung ist die jeweilige Führungsschiene mit zwei parallel verlaufenden Längsschienen ausgestaltet, wobei zwischen den Längsschienen ein Lager-und Laufkörper als Abdeckelement und als Lauffläche für die Rollen wirkt. Damit ist ein Auffahren des vorderen Behälters mit seinen Transportrollen in den Aufnahmeraum im Bereich der Führungsschienen gewährleistet. Die Führungsschienen sind somit auch im vorderen Bereich des Aufnahmeraumes, vorzugsweise für den vorderen Stellplatz des Behälters, nicht störend und das Handhaben und Ein- und Ausfahren auch des vorderen Behälters ist trotz dort positionierter Schienen möglich.

Mit anderen Worten können die Führungsschienen als Linearführungen ausgebildet sein, die jeweils mit einem Schienenelement und einem Bewegungskörper ausgestattet sind, wobei die Schienen auf dem Boden des Aufnahmeraumes oder dem Flugzeugboden fixiert sind und das jeweilige Bewegungselement an der Transferplatte angeordnet ist.

Die Bewegung der Transferplatte ist aufgrund der Wahl von leichtlaufenden Schienen- bzw. Führungssystemen nur mit einer geringen Handhabungskraft möglich. Zur Bewegung der Transferplatte von der Entnahmeposition zur Lagerposition oder umgekehrt kann es somit ausreichen, dass durch ein Bedienelement das Bewegen der Transferplatte mittels Aktuatoren mit motorischer Unterstützung angesteuert wird. In einer möglichen Ausgestaltung könnte mit dem Bedienelement eine kabellose Ansteuerung der Aktuatoren zur Bewegung der Transferplatte sowie eine Statusanzeige über die Position der Transferplatte erfolgen. Ein manuelles Bewegen der Transferplatte kann alternativ ebenso in Erwägung gezogen werden, wenn nur geringe Handhabungskräfte notwendig sind und der Zugriffsbereich für eine Bedienperson ausreichend ist. Möglicherweise können auch Gestänge vorgesehen werden, die den Zugriff zur Transferplatte erleichtern und ggf. weiterhin die Betätigung der Verriegelungsvorrichtung vornehmen.

Die Erfindung betrifft ferner ein Fahrzeug mit einer Kabine und einem darin befindlichen Kabinenmonument, das ein Verstau- und Entnahmesystem gemäß der vorhergehenden Beschreibung aufweist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine räumliche Darstellung eines Aufnahmeraumes mit zwei hintereinander angeordneten Versorgungsbehältern auf zwei hintereinander angeordneten Trolleystellplätzen.
Fig. 2a und Fig. 2b zeigen die Versorgungsbehälter auf dem Trolleystellplatz mit einem erfindungsgemäßen Verstau- und Entnahmesystem,
Fig. 3a und 3b zeigen den Versorgungsbehälter auf einer Transferplatte in einer Ansicht von der Seite in Lagerposition und in Entnahmeposition.
Fig. 4a und 4b zeigen in Detailansichten den Versorgungsbehälter angeordnet auf dem Verstau- und Entnahmesystem in Entnahmeposition.
Fig. 5 zeigt den Versorgungsbehälter mit der hinteren Verriegelungsvorrichtung.
Fig. 6a und 6b zeigen eine erste Ausführungsform einer Verriegelungsvorrichtung mit mechanischer Seilzugbetätigung.
Fig. 7a und 7b zeigen eine zweite Ausführungsform einer Verriegelungsvorrichtung mit elektromechanischer Betätigung.
Fig. 8a und 8b zeigen eine dritte Ausführungsform einer Verriegelungsvorrichtung mit mechanischer Betätigung.
Fig. 9zeigt den Aufnahmeraum mit einem erfindungsgemäßen Verstau- und Entnahmesystem in einer weiteren Ausführungsform.
Fig. 10a bis 10c zeigen das Verstau-und Entnahmesystem gemäß Fig. 9 in unterschiedlichen Belade- und Parkpositionen.
Fig. 11a bis 11c zeigen den Aufnahmeraum gemäß Fig. 9 in unterschiedlichen Belade- und Parkpositionen.
Fig. 12 zeigt in einer Detailansicht das Schienensystem gemäß der zweiten Ausführungsform.
Fig. 13 zeigt ein Flugzeug mit einer Kabine, in der eine Bordküche mit einem Aufnahmeraum angeordnet ist, ausgestattet mit einem erfindungsgemäßen Verstau-und Entnahmesystem.

### DETAILLIERTE DARSTELLUNG EXEMPLARISCHER AUSFÜHRUNGSFORMEN

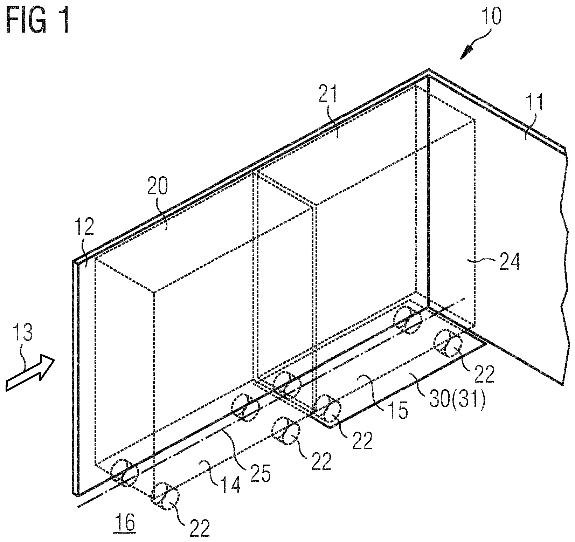

Fig. 1 zeigt einen Aufnahmeraum 10 mit zwei hintereinander angeordneten Versorgungsbehältern 20 und 21 auf zwei hintereinander angeordneten Trolleystellplätzen 14 und 15. Beispielhaft ist das Fahrzeug in diesem Ausführungsbeispiel ein Verkehrsflugzeug, die rollbaren Versorgungsbehälter 20 und 21 sind daher als Servierwagen, sogenannte Trolleys, nach dem Atlas-Standard ausgeführt. Es handelt sich hierbei um sogenannte "Full-Size Trolleys", das heißt Servierwagen mit einer vollen Bautiefe von ungefähr 80 cm. Der Aufnahmeraum 10 ist üblicherweise voll geschlossen und über eine Einschuböffnung 13 zugänglich. Er kann Bestandteil einer Bordküche, fachüblich genannt auch Galley, sein. Für die Lagerung der Versorgungsbehälter 20 und 21 werden diese über die Einschuböffnung 13 (durch ein Pfeilsymbol gekennzeichnet) in den Aufnahmeraum 10 eingeschoben. Der hintere Trolleystellplatz 15 ist in dem gezeigten Aufnahmeraum 10 so vorgesehen, dass der hintere Versorgungsbehälter 21 mit seiner hinteren Behälterwand 24 benachbart bzw. angrenzend zur Rückwand 11 des Aufnahmeraumes 10 verläuft. Der vordere Trolleystellplatz 14 und der hintere Trolleystellplatz 15 sind entlang einer gemeinsamen Längsachse 25 ausgerichtet. Der vordere Versorgungsbehälter 20 ist somit genau vor dem hinteren Versorgungsbehälter 21 positioniert, sodass die Entnahme des hinteren Versorgungsbehälters 21 von der Lagerposition nur möglich ist, wenn der vordere Versorgungsbehälter 20 entfernt und somit der vordere Trolleystellplatz 14 frei ist. Der Zugang über die Einschuböffnung 13 zum hinteren Trolleystellplatz 14 ist aufgrund der begrenzten Armreichweite bei einer Handhabung durch die Flugbegleiter schwierig oder auch ohne Hilfsmittel nicht durchführbar. Auch wenn diese Anordnung von Trolleystellplätzen in einem Verkehrsflugzeug zwar unter dem Aspekt der Bedienbarkeit nicht bevorzugt ist, können jedoch bauliche Zwänge dazu führen, in dem begrenzten Raum eines Verkehrsflugzeuges zu einer optimierten Raumausnutzung beizutragen, wenn solche Versorgungsbehälter auch hintereinander angeordnet werden können.

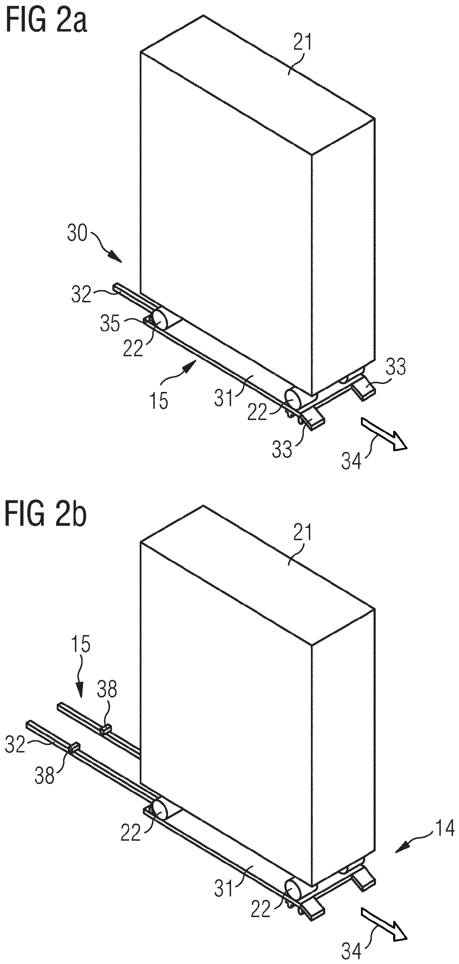

Um die Entnahme oder auch das Abstellen des Versorgungsbehälters 21 auf dem hinteren Stellplatz 15 zu ermöglichen, ist erfindungsgemäß ein Verstau- und Entnahmesystem 30 für diesen Stellplatz 15 vorgesehen. Dieses Verstau- und Entnahmesystem 30 ist im Bodenbereich, unterhalb des Versorgungsbehälters 21 installiert. Im Wesentlichen ist eine Transferplatte 31 vorgesehen, die herausziehbar gestaltet ist und somit das Beladen und Entnehmen des Versorgungsbehälters 21 an einer für die Flugbegleiter komfortablen Position ermöglicht. Eine detaillierte Beschreibung des Verstau- und Entnahmesystems 30 erfolgt nachfolgend anhand der Figuren 2 bis 5.

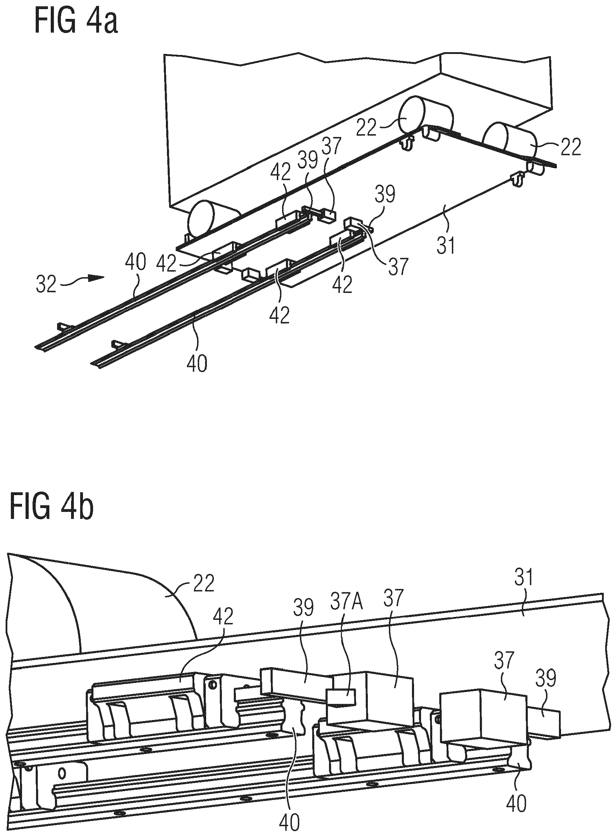

In Fig. 2a und 2b in einer Perspektivdarstellung des Versorgungsbehälters 21 auf dem Trolleystellplatz 15 wird das erfindungsgemäße Verstau- und Entnahmesystem 30 etwas deutlicher. In der Fig. 2a ist der Versorgungsbehälter 21 in der Lagerposition gezeigt. Der Versorgungsbehälter 21 steht auf einer Transferplatte 31, die auf einem Schienensystem 32 beweglich gelagert ist und die in eine Entnahmerichtung 34 verfahren werden kann. Das Schienensystem 32 ist im Bodenbereich des Aufnahmeraumes 10 (siehe Fig. 1) fixiert. Das kann in dem Falle der Ausbildung als Trolleystellplatz in einer Bordküche direkt auf dem Flugzeugfußboden innerhalb der Bordküche vorgesehen sein oder auch auf dem zum Aufnahmeraum 10 gehörenden Fußboden. Die Transferplatte 31 weist im vorderen Bereich Auffahrhilfen 33 auf, die das Bewegen der Rollen 22 des Versorgungsbehälters 21 auf die Transferplatte 31 bzw. wieder hinunter ermöglichen. In der Lagerposition können die hinteren Rollen 22 des Versorgungsbehälters 21 an einen Anschlag 35 heranfahren, der die Lagerposition definiert und ein Überrollen der Transferplatte 31 verhindert. Die Fig. 2b zeigt den Versorgungsbehälter 21 in der Entnahmeposition. Die Transferplatte 31 ist dafür auf dem Schienensystem 32 in die Entnahmerichtung 34 bis zur vorderen Endposition verfahren und ist zumindest teilweise auf dem vorderen Trolleystellplatz 14 positioniert. Dafür sind vordere Verriegelungselemente 37 (gezeigt in Fig. 4) an einem vorderen Endanschlag 39 (gezeigt in Fig. 4) vorgesehen. Ersichtlich sind am Schienensystem 32 hintere Endanschläge 38, die die Transferplatte 31 in Wirkverbindung mit hinteren Verriegelungselementen 36 (später gezeigt) in der Lagerposition festhalten.

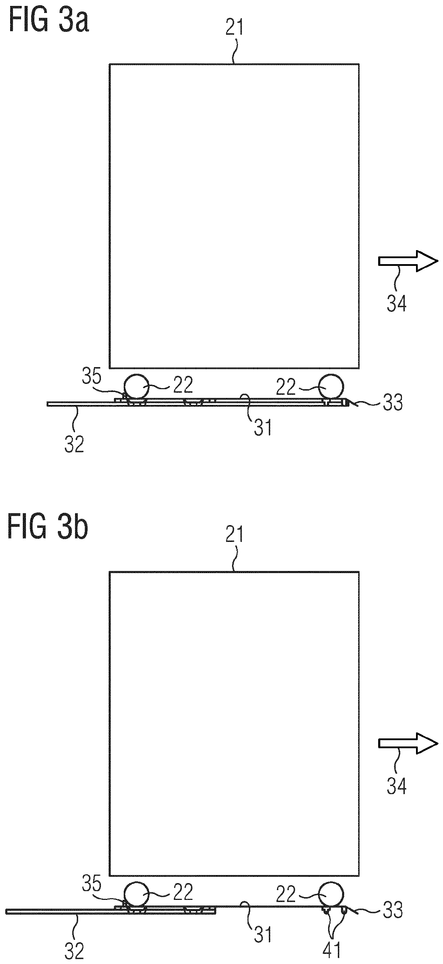

Die Figuren 3a und 3b zeigen den Versorgungsbehälter 21 in einer Seitenansicht positioniert auf der Transferplatte 31 in der Lagerposition sowie der Entnahmeposition. Das Schienensystem 32 ist als Linerarführungssystem ausgebildet, deren Führungsschienen flach aufgebaut sind. Die Bauhöhe der Schienen liegt in einem Bereich von 5 bis 20 mm. Damit ist sichergestellt, dass die Auffahrhöhe auf die Transferplatte 21 so gewählt werden kann, dass die Handhabung von üblicherweise voll beladenen und somit schweren rollbaren Versorgungsbehältern über die Auffahrhilfen 33 handhabbar bleibt. In Fig. 3a ist die Lagerposition dargestellt. Der Versorgungsbehälter 21 ist auf der Transferplatte 31 positioniert und am hinteren Anschlag 35 der Transferplatte 31 sind die hinteren Rollen 22 des Versorgungsbehälters 21 angeschlagen, um einen sicheren Stand des Versorgungsbehälters 21 auf der Transferplatte 31 zu gewährleisten.

Fig. 3b zeigt den Versorgungsbehälter 21 in der Entnahmeposition, d.h. mittels des Schienensystems 32 ist die Transferplatte 31 in die Entnahmerichtung 34 bewegt worden. Um einen sicheren Halt und Bewegungsmöglichkeit der Transferplatte 31 auch die Führungsschienen des Schienensystems 32 hinaus zu gewährleisten, sind im vorderen Bereich der Transferplatte 31 Rollelemente 41 angeordnet.

Detailansichten des Versorgungsbehälters 21 angeordnet auf dem Verstau- und Entnahmesystem 30 in Entnahmeposition sowie eine vorteilhafte Ausgestaltung des Schienensystems 32 und deren Funktionsweise sind in den Figuren 4a und 4b dargestellt.

Fig. 4a zeigt mit Blick von unten das Schienensystem 32, welches unterhalb der Transferplatte 31 angeordnet ist. Die auf Führungsschienen 40 laufenden Bewegungskörper 42 sind an der Transferplatte 31 befestigt. Bevorzugt sind die Führungsschienen 40 als Linearführungsschienen ausgebildet, wobei auch Teleskopschienen Anwendung finden können. An einem vorderen Endanschlag 39, an jeweils der entsprechenden Führungsschiene 40 befestigt, kann eine Verriegelung der Position der Transferplatte 31 erfolgen, um dann eine Entnahmebewegung des Versorgungsbehälters 21 von der fixierten Transferplatte sicher zu ermöglichen.

In Fig. 4b sind in einer Detailansicht die Führungsschienen 40, die jeweiligen Bewegungskörperelemente 42 sowie die vordere Verriegelung 37 gezeigt. Die vordere Verriegelung 37, beispielsweise mit einem Schnappriegel 37A versehen, ist in dieser ausgezogenen Position der Transferplatte 31 (Einfahr- und Entnahmeposition des Versorgungsbehälters 21) über den vorderen Endanschlag 39 verfahren und verriegelt die Transferplatte 31 für den Belade-und Entladevorgang.

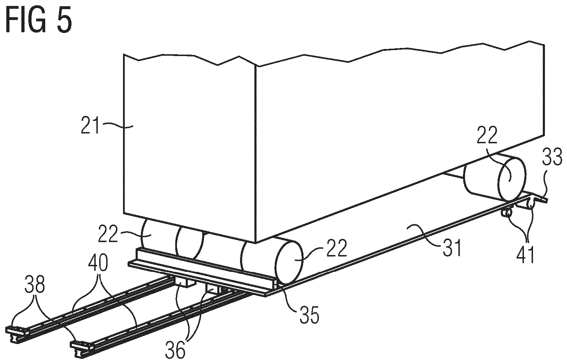

In Fig. 5 ist mit Blick auf die Rückseite des Versorgungsbehälters 21 der hintere Anschlag 35 für die Rollen 22 zur Positionierung des Versorgungsbehälters 21 gezeigt. Hier ist die Transferplatte 31 in vorderster Position des Schienensystems 32 auf den Führungsschienen 40. In dieser Position kann die Transferplatte 31 bewegt werden, d.h. aus der gezeigten ausgefahrenen Position (Entnahmeposition) kann durch Krafteinwirkung, manuell oder auch durch Antriebe unterstützt, die Transportplatte 31 mit dem Versorgungsbehälter 21 in die Lagerposition bewegt werden. Als Endposition der Transferplatte 31 sind hintere Endanschläge 38 vorgesehen, die mit hinteren Verriegelungen 36 der Transferplatte 31 zusammenwirken.

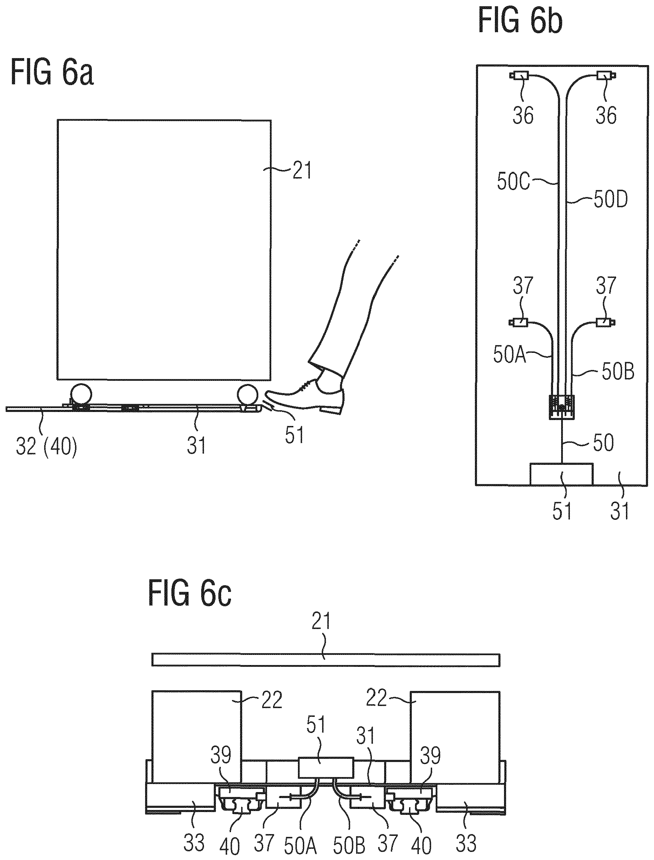

Fig. 6a, 6b und 6c zeigen den auf der Transferplatte 31 positionierten Versorgungsbehälter 21 in einer Seitenansicht, einer Ansicht von unten sowie in einer Ansicht von vorn in einer Detaildarstellung. In Fig. 6b ist erkennbar, dass die Transferplatte 31 auf der Unterseite mit einer Ausführungsform von vorderen und hinteren Verriegelungsvorrichtungen 37 und 36 bestückt ist, die über mindestens einen mechanischen Seilzug 50, vorzugsweise vier Seilzügen 50A, 50B, 50C und 50D gemäß dem gezeigten Ausführungsbeispiel betätigt werden. Die Seilzüge 50 sind vorzugsweise in der Art von Bowdenzügen ausgebildet und können beispielsweise über ein Fußpedal 51 betätigt werden und somit die Verriegelungen ver- bzw. entriegeln. Eine alternative Betätigung der Seilzüge 50 kann auch ein Hebelelement sein, welches per Hand zu bedienen ist (nicht gezeigt). Es ist auch denkbar, dass die hinteren Verriegelungen 36 optional eingesetzt werden, d.h. auch auf diese verzichtet werden kann.

In Fig. 6c ist in einer Detaildarstellung in der Ansicht von vorn erkennbar, dass die vorderen zwei Riegelelemente 37 über den jeweiligen Seilzug 50A und 50B angesteuert werden und dies durch die Betätigung des schematisch dargestellten Fußpedals 51 ermöglicht wird.

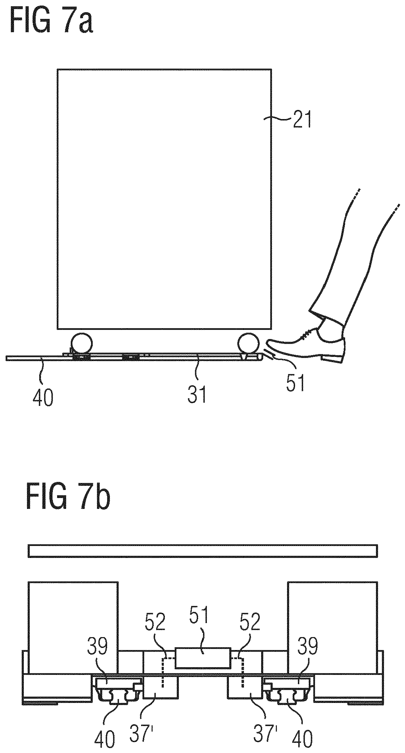

Fig. 7a und 7b zeigen eine zweite Ausführungsform einer Betätigungs- und Verriegelungsvorrichtung. Fig. 7a zeigt in einer Seitenansicht, dass eine Bedienung per Fußpedal 51 erfolgen kann, um die Verriegelung freizugeben. In Fig. 7b ist schematisch gezeigt, dass das Fußpedal 51 in der Art einer elektromechanischen Betätigung die Verriegelungselemente 37' ansteuern kann. Dafür sind Signalleitungen 52 einsetzbar, es können jedoch auch drahtlos Ansteuerungen erfolgen.

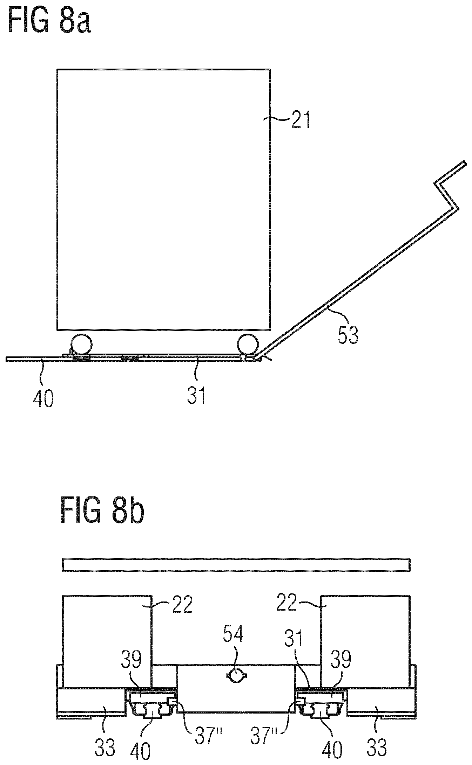

Fig. 8a und 8b zeigen eine dritte Ausführungsform einer Verriegelungsvorrichtung mit mechanischer Betätigung in schematischer Darstellung. Hier ist es vorgesehen, dass eine Handkurbel 53 in ein Schlosselement 54 eingreift und durch Verdrehen im Schlosselement 54 das Verriegelungselement 37" bzw. mehrere Verriegelungselemente 37" betätigt. Mit dem Einsatz der Handkurbel 53 kann nach dem Einrasten bzw. Verdrehen im Schlosselement 54 auch gleichzeitig eine Lasteinleitung/Krafteinwirkung auf die Transferplatte 31 erfolgen und damit auch die Platte bewegt werden.

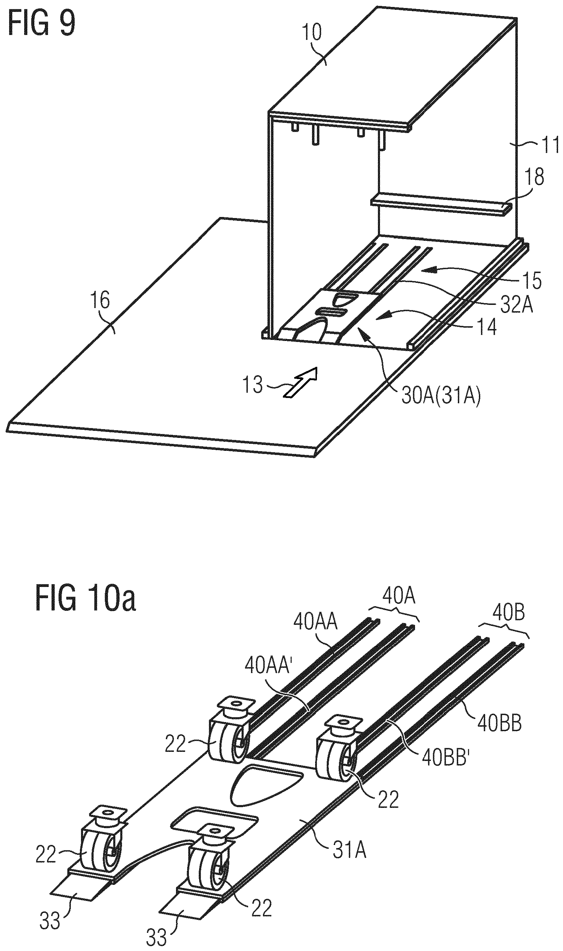

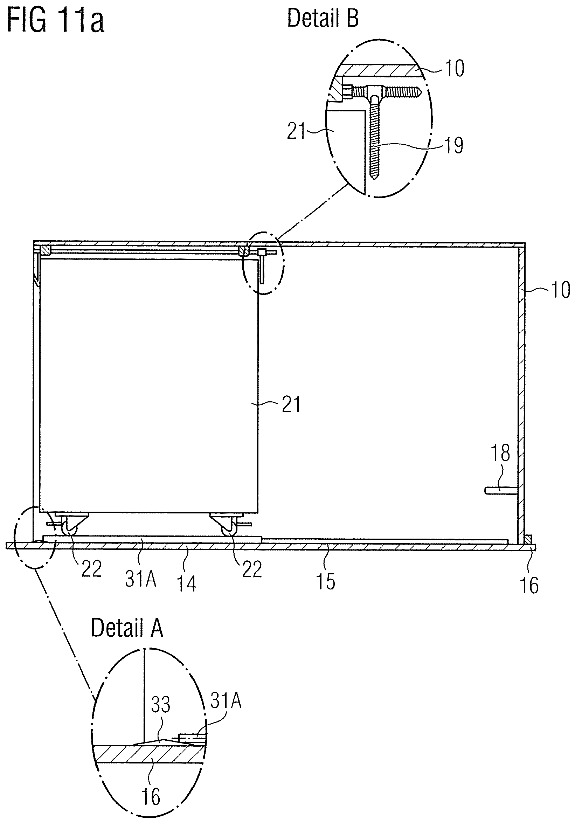

Fig. 9 zeigt eine weitere Ausführungsform eines Verstau- und Entnahmesystems. Es ist der Aufnahmeraum 10 gezeigt mit zwei hintereinander angeordneten Trolleystellplätzen 14 und 15. Diese Trolleystellplätze 14 und 15 dienen zur Aufnahme der rollbaren Versorgungsbehälter 20 und 21 (gezeigt in Figuren 11A bis 11C). Der Aufnahmeraum 10 ist üblicherweise voll geschlossen und über die Einschuböffnung 13 zugänglich. Für die Lagerung der Versorgungsbehälter 20 und 21 werden diese über die Einschuböffnung 13 (durch ein Pfeilsymbol gekennzeichnet) in den Aufnahmeraum 10 eingeschoben. Der hintere Trolleystellplatz 15 ist in dem gezeigten Aufnahmeraum 10 so vorgesehen, dass der hintere Versorgungsbehälter 21 mit seiner hinteren Behälterwand 24 an einem Anschlag 18 benachbart bzw. angrenzend zur Rückwand 11 des Aufnahmeraumes 10 positioniert ist. Der vordere Trolleystellplatz 14 und der hintere Trolleystellplatz 15 sind entlang einer gemeinsamen Längsachse ausgerichtet. Der vordere Versorgungsbehälter 20 ist somit genau vor dem hinteren Versorgungsbehälter 21 positioniert, sodass die Entnahme des hinteren Versorgungsbehälters 21 von der Lagerposition nur möglich ist, wenn der vordere Versorgungsbehälter 20 entfernt und somit der vordere Trolleystellplatz 14 frei ist.

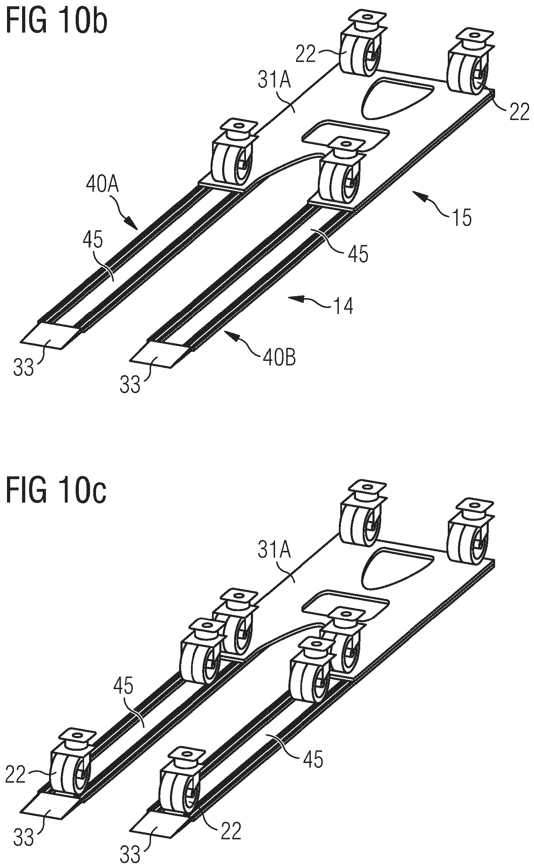

Um die Entnahme oder auch das Abstellen des Versorgungsbehälters 21 auf dem hinteren Stellplatz 15 zu ermöglichen, ist erfindungsgemäß ein Verstau- und Entnahmesystem 30A für diesen Stellplatz 15 vorgesehen. Dieses Verstau- und Entnahmesystem 30A ist im Bodenbereich angeordnet. Im Wesentlichen ist eine Transferplatte 31A vorgesehen, die auf einem Schienensystem 32A bewegbar ist. Die Transferplatte 31A kann auf dem Schienensystem 32A bis zur Einschuböffnung 13 bewegt werden und somit das Beladen und Entnehmen des Versorgungsbehälters 21 an einer für die Flugbegleiter komfortablen Position ermöglichen. Eine detaillierte Beschreibung des Verstau- und Entnahmesystems 30A erfolgt nachfolgend anhand der Figuren 10 bis 12.

In den Figuren 10a bis 10c ist das Verstau-und Entnahmesystem 30A gemäß Fig. 9 in unterschiedlichen Belade- und Parkpositionen gezeigt. Es sind jeweils die Transportrollen 22 der Versorgungsbehälter 20 und 21 (nicht gezeigt) angedeutet. Das Schienensystem 32A weist Führungsschienen 40A und 40B auf, die derart positioniert sind, dass sie jeweils ungefähr lotrecht unterhalb der Transportrollen 22 verlaufen. Der Begriff "ungefähr lotrecht" bedeutet in diesem Zusammenhang, dass sie derart verlaufen, dass die Führungsschiene 40A oder 40B nicht direkt von den Transportrollen 22 überrollt werden kann, sie jedoch so nah wie möglich an den Lasteinleitungspunkten der Transportrollen 22 angeordnet sind. Als Lauffläche für die Transportrollen 22 im Bereich der Oberseite der Führungsschienen 40A oder 40B dienen einerseits die Transferplatte 31A oder Abdeckelemente 45.

Bevorzugt ist die jeweilige Führungsschiene 40A oder 40B als Führungsschiene 40 mit zwei parallel verlaufende Längs schienen 40AA und 40AA' und 40BB sowie 40BB' ausgestattet, wobei zwischen den Längsschienen 40AA und 40AA' und 40BB sowie 40BB' jeweils ein Basiskörper als Abdeckelement 45 wirkt. In Fig. 10A ist die Transferplatte 31A im Bereich der Einschuböffnung positioniert. Auffahrhilfen 33, sind im Bodenbereich 16 an entsprechender Stelle fixiert, um ein Auffahren des Versorgungsbehälters 21 auf die Transferplatte 31A zu ermöglichen. Die Transferplatte 31A kann nunmehr mit dem darauf positionierten Versorgungsbehälter 21 auf den hinteren Stellplatz 15 verschoben werden (siehe Fig. 10B). Die Führungsschienen 40A und 40B, die für das Bewegen der Transferplatte 31A bis in den Bereich der Einschuböffnung 13 verlaufen, sind in dieser Ausführungsform des Schienensystems im Bereich des vorderen Stellplatzes 14 mit einer Abdeckung 45 als Lager-und Laufkörper für die Transportrollen 22 des vorderen Versorgungsbehälters 20 versehen. In der gezeigten Ausführungsform ist das Abdeckelement 45 zwischen den Längsschienen 40AA und 40AA' sowie 40BB und 40BB' vorgesehen. Er dient zum Ausgleich des Höhenunterschieds vom Boden 16 zu der Oberseite der Schienen 40A und 40B und über die Auffahrhilfe 33 können auf die Lauffläche des Lager-und Laufkörpers 45 die Rollen des vorderen Versorgungsbehälters 20 rollen (siehe Fig. 10c).

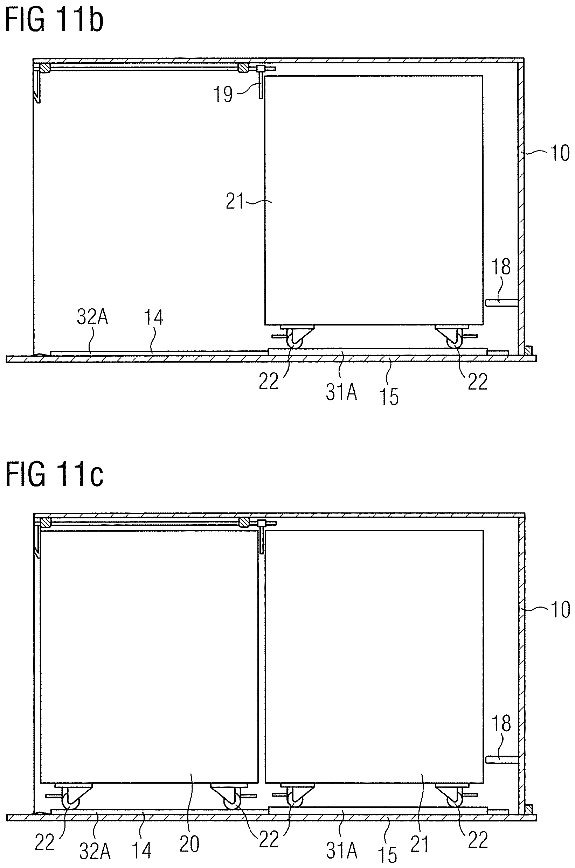

Die Figuren 11a bis 11c zeigen den Aufnahmeraum 10 gemäß Fig. 9 in unterschiedlichen Belade- und Parkpositionen der zwei hintereinander angeordneten Versorgungsbehälter 20 und 21. In Fig. 11A ist die Einfahr-und Entnahmeposition des Versorgungsbehälters 21 ersichtlich. Der Versorgungsbehälter 21 wird beim Einfahren auf die Transferplatte 31A geschoben. Im Detail A ist die Auffahrhilfe 33 gezeigt, die notwendig ist, um den Höhenunterschied zwischen dem Fußboden 16 und der Transferplatte 31A zu überwinden. Die Auffahrhilfe kann dafür einseitig oder aber auch beidseitig (wie gezeigt) angeschrägt ausgeführt sein. Für die Positionierung und Verriegelung der Transferplatte 31A sind Verriegelungsvorrichtungen vorgesehen. Derartige Verriegelungsvorrichtungen können beispielhaft gestaltet sein wir bereits ausführlich zur ersten Ausführungsform des Verstau-und Entnahmesystems (siehe Figuren 4 bis 8) beschrieben. Im Detail B ist erkennbar, dass für das Einfahren des Behälters 21 auf die Transferplatte 31A ein Riegelelement 19 als Anschlag vorgesehen ist. Eine gleichwirkende Lösung ist in der ersten Ausführungsform mit dem Anschlag 35 an der Transferplatte 31 erreicht. Das Riegelelement 19 ist in dieser zweiten Ausführungsform im Deckenbereich des Aufnahmeraumes 10 angeordnet und wird nach Positionierung des Behälters 21 verdreht, um die Bewegung der Transferplatte 31a zum hinteren Stellplatz 15 zu ermöglichen. Hier wird das Einfahren des Behälters 21 an der Hinterwand des Aufnahmeraumes 10 durch einen Anschlag 18 begrenzt. In Figur 11B ist diese Position des hinteren Behälters 21 gezeigt. In Figur 11C ist der Aufnahmeraum 10 mit den beiden hintereinander positionierten Behältern 20 und 21 ersichtlich. Wie in der Figur 10C schon erkennbar ist, ist der hintere Behälter 21 auf der Transferplatte 31A gelagert, der vordere Behälter 20 steht mit seinen Rollen 22 auf den Lager-und Laufkörpern 45.

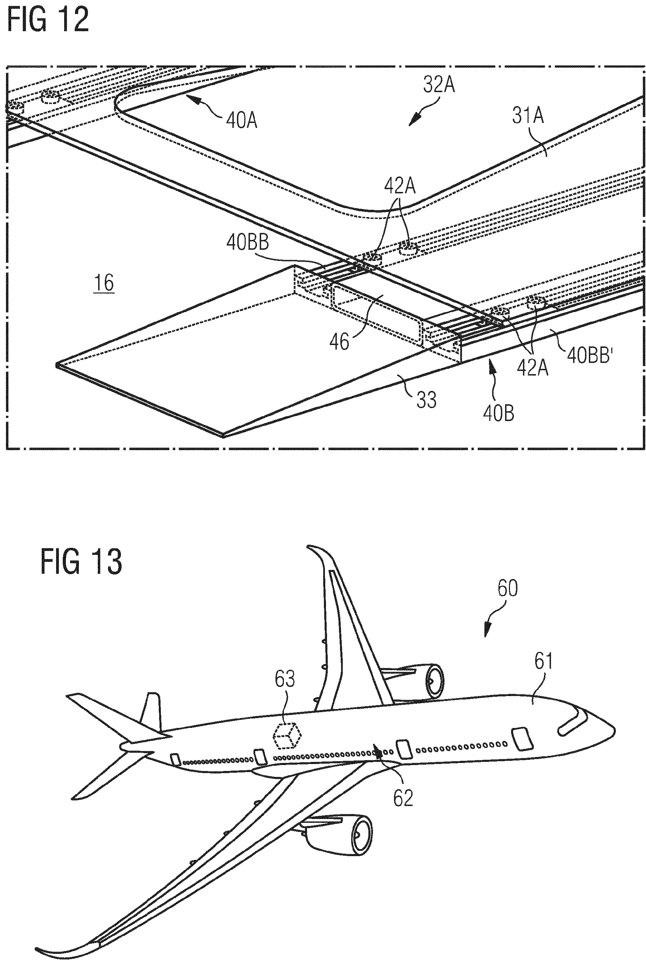

In Figur 12 ist in einer Detailansicht das Schienensystem 32A gemäß der zweiten Ausführungsform im Bereich des stirnseitigen Endes der Führungsschienen 40A und 40B gezeigt, die für das Ein- und Ausfahren der Behälter 20 und 21 gestaltet ist. Stirnseitig der beiden Längsschienen 40BB und 40BB' sind an entsprechender Position am Boden 16 Auffahrhilfen 33 angeordnet. Wenn die Transferplatte 31A nach hinten verschoben ist, wird der Zugang zu den zwischen den beiden Längsschienen 40BB und 40BB' vorgesehenem Flachkörper 46 als Ausführungsform eines Abdeckelementes ermöglicht. Es sind Bewegungskörper 42A an der Transferplatte 31A vorgesehen, die in den Längsschienen verschiebbar sind. Das Abdeckelement bzw. der Flachkörper 46 ist als ein Einlegestück zwischen den Schienen als Lager-und Laufkörper 46 für die Transportrollen 22 des vorderen Behälters 20 ausgebildet. Die Höhe ist angepasst an die Höhe der Laufschienen 40BB und 40BB'.

Durch die gezeigten Komponenten kann folglich ein einfaches, dennoch sehr wirkungsvolles Verstau- und Entnahmesystem realisiert werden, das die Kompaktheit einer Bordküche oder anderen Einrichtungen deutlich vergrößern kann, denn ein Stellplatz mit ausreichender Tiefe kann mit mehreren Servierwagen hintereinander befüllt werden, ohne auf Beschränkungen, die sich durch die Handhabung eines Benutzers mit durchschnittlicher Körpergröße ergeben, Rücksicht nehmen zu müssen.

Schließlich zeigt Fig. 13 ein Flugzeug 60 mit einem Rumpf 61 und einer darin ausgebildeten Kabine 62, in der ein Kabinenmonument 63 angeordnet sein kann, das einen Aufnahmeraum 10 für Versorgungsbehälter aufweist und mit einem erfindungsgemäßen Verstau- und Entnahmesystem 30 oder 30A ausgestattet ist. Ergänzend sei darauf hingewiesen, dass "aufweisend" keine anderen Elemente oder Schritte ausschließt und "ein" oder "eine" keine Vielzahl ausschließt. Bezugszeichen in den Ansprüchen sind nicht als Einschränkung anzusehen.

## Patentansprüche

1. Aufnahmeraum (10) einer Bordküche zur Lagerung für rollbare Behälter (20, 21) in einem Fahrzeug, mit einem Verstau- und Entnahmesystem (30, 30A) mit mindestens einer Transferplatte (31, 31A) und mindestens einem auf der Transferplatte (31, 31A) positionierbaren Behälter (21) mit einer hinteren Behälterwand (24),
**gekennzeichnet durch**:
- ein Schienensystem (32, 32A) im Bodenbereich des Aufnahmeraumes (10),
- eine Transferplatte (31, 31A), die auf dem Schienensystem (32) im Bodenbereich des Aufnahmeraumes (10) bewegbar ist und eine Lagerposition sowie eine Entnahmeposition für den Behälter (21) einnimmt,
- wobei die Lagerposition des Behälters (21) mit seiner hinteren Behälterwand (24) im Bereich der Rückwand (11) des Aufnahmeraumes (10) sowie die Entnahmeposition im Bereich einer Einschuböffnung (13) zum Einschieben und Entnehmen eines mit Transportrollen (22) ausgestatteten Behälters (21) in den Aufnahmeraum (10), angeordnet gegenüberliegend zur Rückwand (11), vorgesehen ist,
- das Schienensystem (32) Führungsschienen (40, 40A, 40B) aufweist, die am Fußboden (16) des Aufnahmeraumes (10) in Bewegungsrichtung der Transferplatte (31) angeordnet sind und von der Einschuböffnung (13) bis in den Bereich der Rückwand (11) verlaufen sowie
- an der Transferplatte (31) in die Führungsschienen (40, 40A, 40B) eingreifende Bewegungskörper (42, 42A) angeordnet sind.

2. Aufnahmeraum (10) nach Anspruch 1,
wobei der Aufnahmeraum (10) zum Aufnehmen mindestens zwei hintereinander angeordneter Behälter (20, 21) mit einem vorderen Stellplatz (14) und einem hinteren Stellplatz (15) ausgebildet ist, wobei der hintere Behälter (21) auf der Transferplatte (31, 31A) positioniert ist.

3. Aufnahmeraum (10) nach einem der Ansprüche 1 oder 2, wobei die Führungsschienen (40A, 40B) derart positioniert sind, dass sie jeweils ungefähr lotrecht unterhalb der Transportrollen (22) verlaufen und als Lauffläche für die Transportrollen (22) im Bereich der Oberseite der Führungsschienen (40) zumindest im Aufnahmeraum (10) des vorderen Stellplatzes (14) jeweils einem Abdeckelement (46) vorgesehen ist.

4. Aufnahmeraum (10) nach einem der Ansprüche 1 bis 3,
wobei die Transferplatte (31) mindestens eine Verriegelungsvorrichtung (36, 37) zum lösbaren Verriegeln der Transferplatte (31) für die Entnahmeposition aufweist.

5. Aufnahmeraum (10) nach Anspruch 4, **dadurch gekennzeichnet, dass** die mindestens eine Verriegelungsvorrichtung (37) mechanisch oder elektromechanisch betätigbar ist.

6. Aufnahmeraum (10) nach einem der Ansprüche 1 bis 5,
ferner aufweisend mindestens einen Anschlag (35, 19) des Behälters (21) auf der Transferplatte (31).

7. Aufnahmeraum (10) nach einem der Ansprüche 1 bis 6,
wobei stirnseitig der Führungsschienen (40A, 40B) an entsprechender Position am Boden (16) Auffahrhilfen (33) auf die Transferplatte (31) oder den Abdeckelementen (45) für Behälter (21) angeordnet sind.

8. Aufnahmeraum (10) nach einem der Ansprüche 1 bis 7,
wobei die Führungsschiene (40A, 40B) zwei parallel verlaufende Längsschienen (40AA, 40AA', 40BB, 40BB') aufweist, wobei zwischen den Längsschienen (40A, 40B) ein Lager-und Laufkörper (46) als Abdeckelement wirkt.

9. Fahrzeug (60), vorzugsweise ein Verkehrsflugzeug, mit einer Kabine (62) und einem darin befindlichen Kabinenmonument (64), das einen Aufnahmeraum (10) nach einem der Ansprüche 1 bis 8 aufweist.

## Claims

1. Storage compartment (10) of a galley for storing rollable containers (20, 21) in a vehicle, comprising a stowage and removal system (30, 30A) with at least one transfer plate (31, 31A) and at least one container (21) positionable on the transfer plate (31, 31A) with a rear container wall (24),
**characterised by**:
- a rail system (32, 32A) in the bottom area of the receiving space (10),
- a transfer plate (31, 31A) movable on the rail system (32) in the floor region of the receiving space (10) and occupying a storage position and a removal position for the container (21),
- the storage position of the container (21) with its rear container wall (24) being provided in the region of the rear wall (11) of the receiving space (10) and the removal position being provided in the region of an insertion opening (13) for inserting and removing a container (21) equipped with transport rollers (22) into the receiving space (10), arranged opposite the rear wall (11),
- the rail system (32) has guide rails (40, 40A, 40B) which are arranged on the floor (16) of the receiving space (10) in the direction of movement of the transfer plate (31) and run from the insertion opening (13) into the region of the rear wall (11), as well as
- moving bodies (42, 42A) engaging in the guide rails (40, 40A, 40B) are arranged on the transfer plate (31).

2. Storage compartment (10) according to claim 1,
wherein the storage compartment (10)) is designed to receive at least two containers (20, 21) arranged one behind the other with a front storage location (14) and a rear storage location (15), wherein the rear container (21) is positioned on the transfer plate (31, 31A).

3. Storage compartment (10) according to one of claims 1 or 2, wherein the guide rails (40A, 40B) are positioned in such a way that they each run approximately vertically below the transport rollers (22) and a cover element (46) is provided in each case as a running surface for the transport rollers (22) in the region of the upper side of the guide rails (40) at least in the storage compartment (10) of the front storage location (14).

4. Storage compartment (10) according to one of the claims 1 to 3,
wherein the transfer plate (31) has at least one locking device (36, 37) for releasably locking the transfer plate (31) for the removal position.

5. Storage compartment (10) according to claim 4, **characterized in that** the at least one locking device (37) is mechanically or electromechanically operable.

6. Storage compartment (10) according to any one of claims 1 to 5,
further comprising at least one stop (35, 19) of the container (21) on the transfer plate (31).

7. Storage compartment (10) according to any one of claims 1 to 6,
wherein drive-on aids (33) are arranged on the transfer plate (31) or the cover elements (45) for containers (21) on the front side of the guide rails (40A, 40B) at a corresponding position on the floor (16).

8. Storage compartment (10) according to any one of claims 1 to 7,
wherein the guide rail (40A, 40B) comprises two longitudinal rails (40AA, 40AA', 40BB, 40BB') extending in parallel, wherein between the longitudinal rails (40A, 40B) a bearing and running body (46) acts as a cover element.

9. Vehicle (60), preferably a commercial aircraft, with a cabin (62) and a cabin monument (64) located therein, comprising a storage compartment (10) according to any one of claims 1 to 8.

## Revendications

1. Espace de réception (10) d'une cuisine de bord pour le stockage pour des récipients roulants (20, 21) dans un véhicule, avec un système de rangement et de prélèvement (30, 30A) avec au moins une plaque de transfert (31, 31A) et au moins un récipient (21) positionnable sur la plaque de transfert (31, 31A) avec une paroi de récipient arrière (24),
**caractérisé par** :
- un système de rails (32, 32A) dans la zone du fond de l'espace de réception (10),
- une plaque de transfert (31, 31A) qui est mobile sur le système de rails (32) dans la zone de fond de l'espace de réception (10) et qui prend une position de stockage ainsi qu'une position de prélèvement pour le récipient (21),
- la position de stockage du récipient (21) étant prévue avec sa paroi arrière (24) dans la zone de la paroi arrière (11) de l'espace de réception (10) ainsi que la position de prélèvement dans la zone d'une ouverture d'insertion (13) pour l'insertion et le prélèvement d'un récipient (21) équipé de rouleaux de transport (22) dans l'espace de réception (10), disposé en face de la paroi arrière (11),
- le système de rails (32) présente des rails de guidage (40, 40A, 40B) qui sont disposés sur le sol (16) de l'espace de réception (10) dans le sens de déplacement de la plaque de transfert (31) et s'étendent depuis l'ouverture d'insertion (13) jusque dans la zone de la paroi arrière (11) ainsi que
- des corps mobiles (42, 42A) s'engageant dans les rails de guidage (40, 40A, 40B) sont disposés sur la plaque de transfert (31).

2. Espace de réception (10) selon la revendication 1,
dans lequel l'espace de réception (10) est conçu pour recevoir au moins deux récipients (20, 21) disposés l'un derrière l'autre, avec un emplacement avant (14) et un emplacement arrière (15), le récipient arrière (21) étant positionné sur la plaque de transfert (31, 31A).

3. Espace de réception (10) selon l'une des revendications 1 ou 2, dans lequel les rails de guidage (40A, 40B) sont positionnés de telle sorte qu'ils s'étendent respectivement à peu près verticalement en dessous des rouleaux de transport (22) et qu'un élément de recouvrement (46) est prévu respectivement comme surface de roulement pour les rouleaux de transport (22) dans la zone de la face supérieure des rails de guidage (40) au moins dans l'espace de réception (10) de l'emplacement avant (14).

4. Espace de réception (10) selon l'une des revendications 1 à 3,
dans lequel le plateau de transfert (31) comporte au moins un dispositif de verrouillage (36, 37) pour verrouiller de manière libérable le plateau de transfert (31) pour la position de prélèvement.

5. Espace de réception (10) selon la revendication 4, **caractérisé en ce que** le au moins un dispositif de verrouillage (37) peut être actionné mécaniquement ou électromécaniquement.

6. Espace de réception (10) selon l'une quelconque des revendications 1 à 5, comprenant en outre au moins une butée (35, 19) du récipient (21) sur la plaque de transfert (31).

7. Espace de réception (10) selon l'une des revendications 1 à 6,
des moyens d'aide à la montée (33) sur la plaque de transfert (31) ou sur les éléments de recouvrement (45) des récipients (21) étant disposés sur la face frontale des rails de guidage (40A, 40B) dans une position correspondante sur le fond (16).

8. Espace de réception (10) selon l'une quelconque des revendications 1 à 7,
dans lequel le rail de guidage (40A, 40B) comprend deux rails longitudinaux parallèles (40AA, 40AA', 40BB, 40BB'), un corps de support et de roulement (46) faisant office d'élément de recouvrement entre les rails longitudinaux (40A, 40B).

9. Véhicule (60), de préférence un avion de ligne, avec une cabine (62) et un monument de cabine (64) situé dans celle-ci, qui présente un espace de réception (10) selon l'une des revendications 1 à 8.
